Europäisches Patentamt

European Patent Office

Office européen des brevets

(19)

(11) Numéro de publication : **0 103 559**
**B1**

(12) **FASCICULE DE BREVET EUROPÉEN**

(45) Date de publication du fascicule du brevet :
27.05.87

(51) Int. Cl.⁴ : **F 24 F 7/02**, A 01 K 1/00

(21) Numéro de dépôt : **83870088.8**

(22) Date de dépôt : **25.08.83**

(54) **Faîte mobile d'aération, en polyester, pour l'aération d'étables.**

(30) Priorité : **26.08.82 BE 4004423**
**26.08.82 BE 2060187**

(43) Date de publication de la demande :
**21.03.84 Bulletin 84/12**

(45) Mention de la délivrance du brevet :
**27.05.87 Bulletin 87/22**

(84) Etats contractants désignés :
**AT CH DE FR GB LI LU NL**

(56) Documents cités :
**CH-A- 309 858**
**DE-A- 1 964 778**
**DE-A- 2 725 558**
**DE-A- 2 915 260**
**DE-U- 1 900 343**

(73) Titulaire : **POLYMETAL P.V.B.A.**
**Kieldrechtsebaan 35a**
**B-2789 Verrebroek (BE)**

(72) Inventeur : **van Eynde, Mauritius**
**Kieldrechtselaan 19**
**B-2789 Beveren-Verrebroek (BE)**

(74) Mandataire : **Donné, Eddy**
**M.F.J.Bockstael Arenbergstraat 13**
**B-2000 Anvers (BE)**

Jouve, 18, rue St-Denis, 75001 Paris, France

## Description

La présente invention a trait à un faîte d'aération mobile pour l'aération d'étables, à savoir, en particulier, à un système d'aération d'étable comportant un faîte d'aération mobile, exécuté de préférence mais pas nécessairement, en une matière polyester appropriée.

Un tel faîte mobile en polyester présente l'avantage, à l'opposé des faîtes mobiles connus, p. e. selon le brevet CH-A-309 858 qu'il est très facile à lever, ce qui permet d'utiliser sans problèmes des moyens de commande tels que des câbles et un ou plusieurs treuils.

On sait que l'aération des étables s'effectue de manière traditionnelle principalement de deux manières différentes, à savoir, d'une part, de manière dynamique, comme par ex. selon le DE-A-1 964 778, c'est-à-dire à l'aide de ventilateurs, et, d'autre part, de manière statique, c'est-à-dire à l'aide de courants d'air naturels engendrés entre une ouverture d'entrée d'air et une ouverture de sortie d'air, l'ouverture d'entrée d'air se présentant par exemple sous forme d'une fente prévue dans la paroi et susceptible d'être fermée ou non, et l'ouverture de sortie étant formée par exemple par des cheminées et/ou des ouvertures réglables ou non, prévues dans le toit, de préférence au niveau du faîte.

On sait également que le réglage des systèmes d'aération d'étables connus jusqu'à présent s'effectue par variation de l'ouverture d'entrée d'air, l'ouverture de sortie d'air restant généralement ouverte ou pouvant être plus ou moins fermée au moyen de clapets. Un tel système est révélé par le DE-A-2 915 260. Ces systèmes connus présentent aussi l'inconvénient que le réglage est très complexe et coûteux, en raison du fait que les clapets des ouvertures d'entrée et des ouvertures de sortie sont commandés par des dispositifs de commande séparés.

Or, on conçoit facilement que le réglage de ces systèmes d'aération d'étable connus présente des difficultés sérieuses, non seulement en ce qui concerne la ventilation proprement dite, mais également en ce qui concerne le chauffage de l'étable, de sorte qu'il n'est pas toujours possible d'éviter à temps des effets nuisibles pour les animaux, tels que des variations brusques de la température ou autres, provoqués par des courants d'air, des pertes de chaleur, etc.

Or, la présente invention concerne un système d'aération d'étable, caractérisé en ce que les ouvertures d'entrée et de sortie d'air peuvent être réglées automatiquement et en ce que, dans un mode d'exécution spécial, est tenu compte de la direction du vent pour éviter d'engendrer des courants d'air tout en assurant une bonne ventilation, et maintenir la température régnant à l'intérieur de l'étable à son niveau optimal pour assurer à tout point un rendement maximum du système d'aération mis en œuvre.

Le système d'aération selon l'invention est du genre dont les parois latérales de l'étable sont munies d'ouvertures d'entrée d'air et le toit de l'étable présente une ouverture de sortie d'air située au niveau du faîte, duquel lesdites ouvertures d'entrée d'air sont munies de clapets de fermeture, tandis que ladite ouverture de sortie d'air se présente sous forme d'une fente de faîte susceptible d'être fermée par une coiffe de faîte, articulée à l'extrémité libre d'au moins deux leviers, dont l'autre extrémité est articulée à la toiture, des moyens étant prévus, d'une part, pour commander lesdits clapets de fermeture, et, d'autre part, pour faire pivoter lesdits leviers et commander ainsi par leur entremise les déplacements vers le haut ou vers le bas de ladite coiffe de faîte, et présente la caractéristique que les susdits moyens de commande sont formés par des câbles ou autres dispositifs analogues, dont au moins un câble relié à un clapet et au moins un câble relié à ladite coiffe de faîte sont commandés par un même treuil.

Les caractéristiques et avantages du système selon l'invention ressortiront plus clairement de la description détaillée suivante d'un mode de mise en œuvre préféré, donnée sans la moindre intention restrictive avec référence aux dessins annexés dans lesquels :

la figure 1 représente en coupe transversale schématique une étable équipée d'un système d'aération selon l'invention, représenté à l'état de fermeture totale ;

la figure 2 représente à plus grande échelle la partie F2 de la figure 1 ;

la figure 3 représente une vue du dispositif selon la figure 2, regardé dans la direction indiquée par la flèche F3 de cette dernière ;

la figure 4 représente une vue analogue à celle selon la figure 1, à part le fait que le système d'aération selon l'invention est dessiné à l'état ouvert ;

la figure 5 représente à plus grande échelle la partie F5 de la figure 4 ;

la figure 6 représente une vue du dispositif selon la figure 5, regardé dans la direction indiquée par la flèche F6 de cette dernière ;

la figure 7 représente une vue analogue à celle selon la figure 1, d'une variante d'exécution ;

la figure 8 représente une vue analogue à celle selon la figure 7, à part le fait que le système d'aération est dessiné à l'état ouvert ;

la figure 9 représente une vue analogue à celle selon la figure 7, à part le fait que le système d'aération est dessiné à l'état d'ouverture partielle ; et

la figure 10 représente à plus grande échelle et de manière schématique la partie F10 de la figure 9.

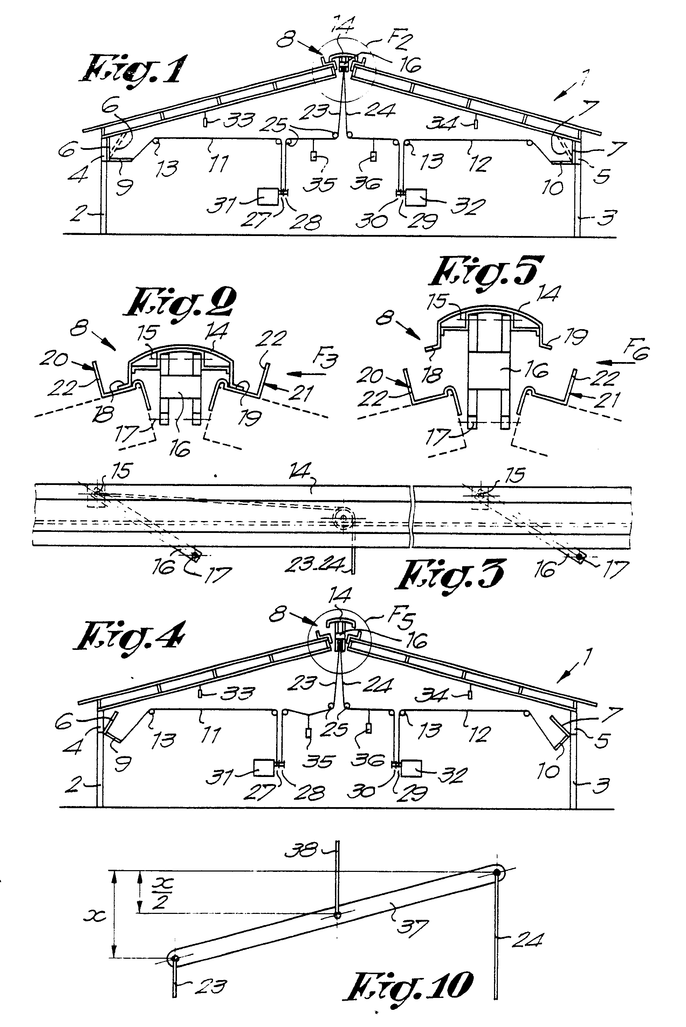

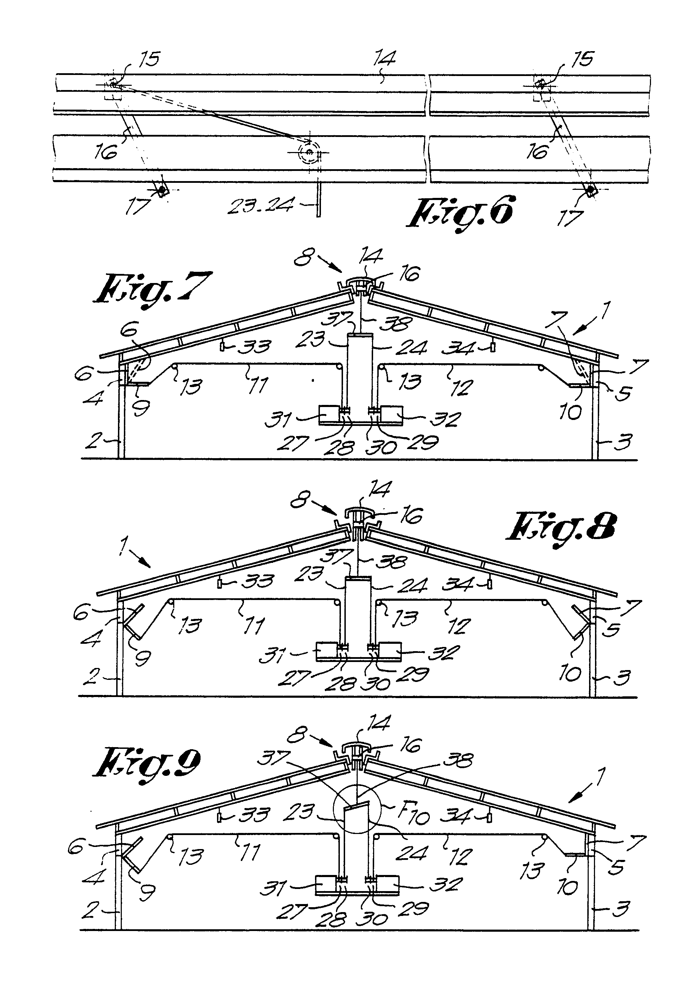

Le système d'aération selon le mode de mise en œuvre illustré par les figures 1 à 6, s'applique à une étable 1, représentée de manière schématique et comportant, outre les murs terminaux, des parois latérales, respectivement 2 et 3, et une toiture, le système d'aération selon l'invention ici appliqué se composant essentiellement d'ouvertures 4 et 5, prévues dans les parois latérales 2 et 3 et susceptibles d'être fermées par des clapets, respectivement 6 et 7, ainsi que d'un faîte mobile 8, susceptible d'être déplacé pour former une ouverture de sortie d'air à son niveau.

Dans le mode de mise en œuvre ici décrit et représenté, chacun des clapets 6 et 7 est muni d'un levier, respectivement 8 et 9, dont l'extrémité libre est fixée à un câble, respectivement 11 et 12, passant librement sur des galets 13, chaque câble pouvant être relâché ou tendu de manière appropriée.

Le faîte mobile 8 comporte essentiellement une coiffe de faîte 14, articulée de manière appropriée à l'aide de pivots 15 à un nombre correspondant de leviers 16, dont l'extrémité libre est articulée librement au moyen d'un pivot 17 à une partie fixe de la toiture, telle qu'une panne ou autre.

Les bords libres, respectivement 18 et 19, de ladite coiffe de faîte 14 coopèrent à l'état fermé avec des profilés en Z, respectivement 20 et 21, prévus sur toute la longueur de l'étable et dont la hauteur des bords redressés 22 est choisie de manière à éviter directement la pénétration d'air froid lorsque le faîte d'aération 8 est ouverte. Ces profilés en Z 20 et 21 assurent en outre un écoulement efficace de l'eau de pluie du faîte.

L'extrémité libre de deux câbles, respectivement 23 et 24, qui passent sur des galets 25 et dont l'extrémité libre peut être relâchée ou tendue, est fixée à un ou plusieurs leviers 16 au niveau du pivot 15.

Selon la présente invention, les extrémités libres des câbles 11-23, d'une part, et des câbles 12-24, d'autre part, sont enroulées de manière appropriée sur des tambours de treuil de préférence séparés, respectivement 27-28 et 29-30, dont le sens d'enroulement est choisi de manière que l'enroulement d'un câble 11 ou 12 provoque le déroulement du câble 23 ou 24 ou inversement, pour assurer que la fermeture des clapets 6 et/ou 7 détermine également la fermeture du faîte d'aération 8, ou inversement.

Dans un mode de mise en œuvre préféré du système de l'invention, les tambours 27-28, d'une part, et 29-30, d'autre part, sont commandés efficacement au moyen d'un treuil électrique, respectivement 31 et 32, treuils électriques qui, dans un mode d'exécution particulier, sont commandés individuellement par des signaux émanant de détecteurs séparés 33 et 34.

En outre, les câbles 23 et 24 sont de préférence munis de poids 35 et 36, qui les maintiennent constamment sous tension.

On voit de ce qui précède que, dans le présent mode de mise en œuvre de l'invention, l'ouverture des clapets 6 ou 7 détermine également l'ouverture du faîte d'aération 8, c'est-à-dire le soulèvement de la coiffe 14. Il s'agit d'une commande pouvant être exécutée soit manuellement à l'aide de treuils mécaniques, soit automatiquement à l'aide de treuils électriques, commandés de préférence par les signaux émanant des détecteurs 33 et 34 qui, en fonction de la direction du vent, ferment plus ou moins l'une ou l'autre des entrées d'air, respectivement 4 et 5, la largeur de la sortie d'air étant déterminée par l'entrée d'air la plus largement ouverte.

Bien que le système décrit dans les lignes précédentes se distingue par un fonctionnement fort efficace, il présente néanmoins l'inconvénient que, lorsque les clapets d'un des côtés de l'étable sont fermés, le faîte d'aération reste totalement ouvert, de manière que le rapport entre l'entrée et la sortie d'air s'écarte de sa valeur normale, ce qui, surtout lorsque l'étable doit être chauffée, peut avoir une influence nuisible sur le rendement de l'installation.

Dans le mode d'exécution illustré par les figures 7 à 10 est remédié au susdit inconvénient par le fait que si, au côté de l'étable exposé au vent, les clapets se ferment plus ou moins sous la commande du détecteur 33 ou 34, le faîte d'aération 8, à savoir, en particulier, la coiffe 14, se ferme plus ou moins et cela à un degré qui est proportionnel à celui de la fermeture des clapets, ce qui s'obtient grâce au fait que les câbles 23 et 24 sont, en l'occurrence, fixés aux extrémités d'un joug 37, relié au milieu par un câble 38 à l'extrémité libre d'un levier 16, comme dans le mode d'exécution précédent.

Il s'ensuit, comme le montre surtout la figure 10, qu'en cas d'ouverture ou de fermeture égale des clapets (figures 7 et 8), le joug 37 reste en position horizontale et le faîte d'aération s'ouvre tout comme dans le mode d'exécution précédent, tandis que, en cas de fermeture unilatérale des clapets, comme c'est le cas par exemple du clapet 7 dans la figure 9, le câble 24 se relâche automatiquement, permettant ainsi la descente partielle de ladite coiffe de faîte 14.

Par suite du fait que le point d'application du câble 38 (figure 10) se trouve exactement au milieu entre les points d'application des câbles 23 et 24, le déplacement x de l'un ou l'autre des câbles 23 et 24 s'accompagne d'un déplacement proportionnel du câble 38. D'où la conclusion que la fermeture ou l'ouverture de la coiffe 14 est due à moitié à l'ouverture ou la fermeture du clapet 6 et à moitié à l'ouverture ou la fermeture du clapet 7. Inutile de souligner que cette solution conduit à un rendement énergétique maximum.

En outre, les réglages auxquels se prête le système selon l'invention assurent, lorsque les clapets d'entrée d'air 6 et 7 sont totalement fermés et la température de l'étable est insuffisante, le chauffage démarre automatiquement, de sorte qu'on obtient ainsi un système d'aération et de chauffage entièrement automatique.

Il va sans dire que les parties susmentionnées de l'installation selon l'invention pourront être exécutées en des matières appropriées quelconques, bien qu'un mode de mise en œuvre préféré préconise l'exécution desdits profilés 20-21 et/ou de la coiffe 14 en du polyester armé, entre autres pour en réduire le poids et la transparence.

D'autre part, il est évident que les clapets 6 et 7 et la coiffe 14 pourront, à volonté, être des éléments venus d'une pièce ou composés de plusieurs pièces et reliés entre eux de manière qu'un seul mécanisme de commande à câbles 11, 12 et 23, 24 suffit par étable.

Dans les figures 1 et 7, une deuxième position de fermeture possible des clapets 6 et 7 est dessinée en pointillés. Cette solution présente l'avantage que, même en cas de faible ouverture de l'un ou l'autre de ces clapets, le courant d'air ainsi obtenu est envoyé dans l'étable en passant par le plafond.

**Revendications**

1. Système d'aération d'étable du genre dont les parois latérales (2, 3) de l'étable (1) sont munies d'ouvertures d'entrée d'air (4, 5) et le toit de l'étable présente une ouverture de sortie d'air située au niveau du faîte, dans lequel lesdites ouvertures d'entrée d'air (4, 5) sont munies de clapets de fermeture (6, 7), tandis que ladite ouverture de sortie d'air se présente sous forme d'une fente de faîte susceptible d'être fermée par une coiffe de faîte (14), articulée à l'extrémité libre d'au moins deux leviers (16), dont l'autre extrémité est articulée à la toiture, des moyens étant prévus, d'une part, pour commander lesdits clapets de fermeture (6, 7), et, d'autre part, pour faire pivoter lesdits leviers (16) et commander ainsi par leur entremise les déplacements vers le haut ou vers le bas de ladite coiffe de faîte (14), caractérisé en ce que les susdits moyens de commande sont formés par des câbles ou autres dispositifs analogues, dont au moins un câble (11-12) relié à un clapet (6-7) et au moins un câble (23-24 ; 38) relié à ladite coiffe de faîte (14) sont commandés par un même treuil (31-32).

2. Système d'aération d'étable selon la revendication 1, caractérisé en ce que lesdits clapets de fermeture (6, 7) sont, au niveau de leur bout d'articulation, munis d'un levier (9, 10), à l'extrémité libre duquel est fixé le câble (11-12) du clapet (6-7), dont l'autre extrémité libre est fixée sur un tambour d'enroulement (27-29) du treuil (31-32).

3. Système d'aération d'étable selon la revendication 1 ou 2, caractérisé en ce que le câble (23-24) relié à ladite coiffe de faîte (14) est fixé à l'extrémité, articulée à la coiffe de faîte (14), d'au moins l'un des leviers (16) de cette dernière, et que l'autre extrémité dudit câble (23-24) est fixée sur un tambour d'enroulement (28-30) du treuil (31-32).

4. Système d'aération d'étable selon la revendication 1 ou 2, caractérisé en ce que le câble (38) fixé à l'extrémité, articulée à ladite coiffe de faîte (14), d'au moins l'un des leviers (16) de cette dernière, par son autre extrémité libre est fixé au milieu d'un joug (37), et en ce qu'à chacune des deux extrémités de ce joug (35) est fixé un câble (23-24), dont les autres extrémités libres sont fixées sur des tambours d'enroulement (28-30) de treuils (31, 32) séparés.

5. Système d'aération selon l'une des revendications précédentes, caractérisé en ce que sur l'arbre de commande dudit treuil (31-32), sont montés deux tambours d'enroulement (27, 28-29, 30), dont l'un reçoit le câble (11-12) pour commander les clapets de fermeture (6, 7), et l'autre reçoit le câble (23-24) pour commander la coiffe de faîte (14), câbles dont l'un s'enroule à droite et l'autre s'enroule à gauche.

6. Système d'aération d'étable selon l'une des revendications précédentes, caractérisé en ce que lesdits treuils (31-32) sont des treuils électriques.

7. Système d'aération d'étable selon la revendication 6, caractérisé en ce qu'à l'intérieur de l'étable sont prévus un ou plusieurs détecteurs (33-34) chargés de la commande desdits treuils électriques (31-32).

8. Système d'aération d'étable selon l'une des revendications précédentes, caractérisé en ce que ladite coiffe de faîte (14) est, à chacun de ses bords, muni d'une bande d'étanchéité (18, 19).

9. Système d'aération selon la revendication 8, caractérisé en ce que lesdites bandes d'étanchéité (18, 19) reposent lorsque la coiffe de faîte (14) se trouve dans sa position de fermeture, dans des profilés en Z (20, 21) munis à cet effet d'un bord redressé.

10. Système d'aération d'étable selon l'une des revendications précédentes, caractérisé en ce que lesdits câbles (11, 12, 23, 24) sont guidés par des galets (13, 25), un poids (36) étant, le cas échéant, suspendu au câble entre deux de ces galets.

**Claims**

1. Ventilation system for cattle sheds of the type where the side walls (2, 3) of the cow shed (1) have air inlets (4, 5) and the roof of the cow shed is provided with an air outlet on which level, in which the said air inlets (4, 5) are provided with closing flaps (6, 7), while the said air outlet is in the form of a ridge slot which can be closed by a ridge tether (14), articulated at its free end by means of two levers (16), of which the other end articulated to the roof means being provided, on the one hand, to control the said closing flaps (6, 7), and on the other hand to make the said levers (16) swivel and thus to control by their intervention the upwards or downwards moving of the said ridge tether (14), characterised thereby that the said means of control are formed by the cables or other similar device of which at least one cable (11, 12) is connected with one flap (6, 7) and at least one cable (23, 24, 38) is connected with the said ridge tether (14) are driven by the same winch (31, 32).

2. Cattle ventilation system according to claim 1, characterised thereby that the said closing flaps (6, 7) are provided of a lever (9, 10) on the level of the articulated end, and at the free end of which the cable (11, 12) has been connected of flap (6, 7) of which the other free end is connected the winding drum (27, 29) of the winch (31, 32).

3. Cattle shed ventilation system according to claims 1 or 2 characterised thereby that the cable (23, 24) connected with the said ridge tether (14) is fixed to the articulated end of the ridge cover (14), of at least one of the levers (16) of the latter and the other end of the said cable (23, 24) is fixed the winding drum (28, 30) of the winch (31, 32).

4. Cattle shed ventilation system according to claim 1 or 2 characterised thereby that the cable (38) fixed at the articulated end of the said ridge cover (14) of at least one of the levers (16) of the latter is fixed to the middle of a yoke (37) by its other free end, and thereby that at each of the two ends of this yoke (35) a cable is fixed (23, 24), of which the other free ends are fixed at the winding drums (28, 30) of the separate winches (31, 32).

5. Ventilation system according to one of the previous claims, characterised thereby that on the driving shaft of the said winch (31, 32), two winding drums (27, 28-29, 30) are fitted, of which one receives the cable (11, 12) to control the closing flaps (6, 7), and the other receives the cable (23, 24) to control the ridge cover (14), cables of which one is winded to the right and the other is winded to the left.

6. Cattle shed ventilation system according to one of the previous claims characterised thereby that the said winches (31, 32) are electric winches.

7. Cattle shed ventilation system according to claim 6 characterised thereby that inside the cattle shed one or several detectors (33, 34) are provided serving to control the said electric winches (31, 32).

8. Cattle shed ventilation system according to one of the previous claims characterised thereby that the said ridge cover (14) is provide at each of its ends with a jointing strip (18, 19).

9. The ventilation system according to claim 8 characterised thereby that the said jointing strips (18, 19) rest, when the ridge cover (14) is in its closed position, in Z shaped rolled sections (20, 21) provides for that purpose with a raised side.

10. Cattle shed ventilation system according to one of the previous claims characterised thereby that the said cables (11, 12, 23, 24) are guided by rollers (13, 25) a weight (36), in case of need, hanging at a cable between these two rollers.

**Patentansprüche**

1. Stallüftungssystem der Type wo die Seitenwände (2, 3) des Stalles (1) versehen sind mit Lufteintrittsöffnungen (4, 5) und das Dach des Stalles Luftaustrittsöffnungen hat auf Firstebene in dem genannte Lufteinstrittsöffnungen (4, 5) mit Verschlußklappen versehen sind (6, 7), während die genannte Luftaustrittsöffnung eine Spaltform hat geeignet abgeschlossen zu werden mittels einer Dachfirsthaube (14), gelenkartig verbunden am freien Ende mit wenigstens zwei Hebelstangen (16), wovon das andere Ende gelenkartig verbunden ist mit dem Dachstuhl, wobei einerseits die Mittel vorgesehen sind die gesagten Verschlußklappen (6, 7) zu bedienen und andererseits um die gesagten Hebelstangen (15) schwenken zu lassen und damit, durch ihre Zwischengliederung, die Verschiebungen nach oben und nach unten der gesagten Dachfirsthaube (14) zu erreichen, dadurch gekennzeichnet daß die gesagten Bedienungsmittel gebildet werden durch Seile oder andere ähnliche Vorrichtungen von denen wenigstens ein Seil (11-12) verbunden mit einer Klappe (6-7) und wenigstens ein Seil (23-24) verbunden mit der gesagten Dachfirsthaube (14) von einer gleichen Winde (31-32) bedient werden.

2. Stallüftungssystem laut Anspruch 1, dadurch gekennzeichnet daß besagte Verschlußklappen (6, 7) auf der Ebene ihres gelenkartigen Endes mit einer Hebelstange (9, 10) versehen sind mit deren freiem Ende das Seil (11, 12) der Klappe (6-7) verbunden ist dessen anderes freies Ende befestigt ist an der Seiltrommel (27-29) der Winde (31-32).

3. Stallüftungssystem laut Anspruch 1 oder 2, dadurch gekennzeichnet daß das Seil (23-24), verbunden mit der besagten Dachfirsthaube (14), befestigt ist an dem Ende, gelenkig verbunden mit der Dachfirsthaube (14) von wenigstens einer der Hebelstangen (16) der letzteren und daß das andere Ende des besagten Seiles (23-24) befestigt ist an einer Seiltrommel (23-30) der Winde (31-32).

4. Stallüftungssystem laut Anspruch 1 oder 2, dadurch gekennzeichnet daß das Seil (38) befestigt am Ende, gelenkig verbunden mit der besagten Dachfirsthaube (14) von wenigstens 1 der Hebelstangen (16) der letzteren, mit seinem anderen freien Ende im Mittelpunkt eines Joches befestigt ist (37) und dadurch daß an jedem der beiden Enden des Joches (35) Seile (23-24) befestigt sind deren andere freie Enden befestigt sind an den Seiltrommeln (28-30) der getrennten Winden (31, 32).

5. Lüftungssystem laut vorhergehender Ansprüche, dadurch gekennzeichnet daß auf den Antriebswellen der genannten Winde (31-32) zwei Seiltrommeln (27, 28-29, 30) montiert sind wovon eine das Seil (11-12) erhält zur Bedienung der Verschlußklappen (6, 7) und die andere das Seil (23-24) erhält zur Bedienung der Dachfirsthaube (14), Seile wovon das eine sich nach links, das andere sich nach rechts aufwickelt.

6. Stallüftungssystem laut einer der vorhergehenden Ansprüche, dadurch gekennzeichnet daß genannte Winden (31-32) elektrische Winden sind.

7. Stallüftungssystem laut Anspruch 6, dadurch gekennzeichnet daß im Stallinneren einen oder verschiedene Detektoren vorgesehen sind (33-34) zur Bedienung der genannten elektrischen Winden (31-32).

8. Stallüftungssystem laut einer der vorhergehenden Ansprüche, dadurch gekennzeichnet daß die Dachfirsthaube (14) auf beiden Seiten mit einem Abdichtungsstreifen versehen ist (18, 19).

9. Lüftungssystem laut Anspruch 8, dadurch gekennzeichnet daß die genannten Abdichtungsstreifen (18, 19) wenn die Dachfirsthaube (14) sich in dem geschlossenen Stand befindet, in Z-förmigen Profileisen ruhen, die hierzu auf einer Seite erhöht wurden.

10. Stallüftungssystem laut einer der vorhergehenden Ansprüche dadurch gekennzeichnet daß die genannten Seile (11, 12, 23, 24) durch Rollen geführt werden (13, 25) wobei, wenn notwendig, ein Gewicht (36) an das Seil gehängt wird zwischen den beiden Rollen.

Fig.1

Fig.2

Fig.5

Fig.3

Fig.4

Fig.10

Fig.6

Fig.7

Fig.8

Fig.9